# EUROPEAN PATENT APPLICATION

(11) **EP 4 491 581 A1**
(43) Date of publication of application: **15.01.2025**
(21) Application number: 23184442.4
(22) Date of filing: 10.07.2023
(51) Int. Cl.: C01G 49/10, C01G 49/14, C23G 1/36

(54) **METHOD FOR PRODUCING IRON(II) SULFATE HEPTAHYDRATE**

(71) Applicant: amaTEQ Holding GmbH, 48143 Münster (DE)
(72) Inventor: Kehrmann, Alexander, 48143 Münster (DE)
(74) Representative: Hoffmann Eitle

(57) **Abstract**

In a method for producing iron(II) sulfate heptahydrate, materials containing iron(II) chloride are purified, followed by reaction of the iron(II) chloride with sulfuric acid to yield iron(II) sulfate monohydrate. The iron(II) sulfate monohydrate is then converted into iron(II) sulfate heptahydrate

## Description

### BACKGROUND OF THE INVENTION

The present invention relates to a method for producing iron(II) sulfate heptahydrate from materials containing iron(II) chloride that are generated during the processing of iron, steel and/or iron containing ores.

In the past, iron(II) sulfate heptahydrate has been used as a chromate reducer for converting harmful chromium (VI) compounds into chromium (III) compounds in cement, or for soil preparation. Further applications of iron(II) sulfate heptahydrate include its use as fertilizer, for phosphate precipitation in the purification of sewage water, for conditioning of sewage slurry, or as raw material for producing iron oxide pigments. Spent pickling solutions (pickling liquor) from the processing of steel have been used as a starting material for producing iron(II) sulfate heptahydrate and also for producing iron(II) sulfate monohydrate, which can be converted into iron(II) sulfate heptahydrate (see, for example, US 4,222,997 and US 4 382 916 A).

A spent pickling solution also serves as the starting material in the case of U.S. Pat. No. 5,417,955, which describes a method and device for treating a pickling liquor to produce hydrochloric acid and ferric sulfate solution. In the process of US 5,417,955, iron(II) sulfate monohydrate, which is obtained as the initial product, is subsequently oxidized in order to convert it into ferric sulfate (Fe₂(SO₄)₃).

More recent applications for iron(II) sulfate heptahydrate include its use as a starting material for battery production. CN 105293588 A describes a preparation method of battery grade iron(II) sulfate heptahydrate that starts out from iron(II) sulfate obtained as a by-product during the production of titanium dioxide. However, processes that are capable of utilizing other sources of iron for the production of high purity iron(II) sulfate heptahydrate in an economic manner are still lacking.

In view of the foregoing, it would be desirable and advantageous to provide new methods for producing high purity iron(II) sulfate heptahydrate. From economic and environmental perspectives, such processes ideally would be capable of utilizing industrial by-products as starting materials.

### SOLUTION TO THE PROBLEM

The process of the present application seeks to achieve the objectives stated above by using materials containing iron(II) chloride (FeCl₂) that are generated during the processing of iron, steel and/or iron containing ores, such as materials that are generated during the processing of ilmenite, as raw materials for the production of iron(II) sulfate. Furthermore, the process of the present application seeks to achieve these objectives by reacting iron or iron oxide containing ores or materials with hydrochloric acid to generate iron chloride-containing solutions that can be either processed alone or in combination with the aforementioned iron chloride containing materials to make iron sulfate monohydrate (FeSO_{4˙}H₂O) and iron sulfate heptahydrate (FeSO_{4˙}7H₂O).

The raw materials that are employed in the process of the presently claimed invention are pre-treated to obtain a purified solution comprising iron(II) chloride (FeCl₂), followed by conversion of the iron(II) chloride into iron(II) sulfate monohydrate (FeSO_{4˙}H₂O), optional purification of the iron(II) sulfate monohydrate and subsequent conversion of the iron(II) sulfate monohydrate into iron(II) sulfate heptahydrate (FeSO_{4˙}7H₂O). While the iron(II) sulfate heptahydrate obtained in this manner generally already exhibits adequate purity to allow its use as a battery material, further purification measures may also be implemented at this stage.

The process of the presently claimed invention allows high-quality, durable and free flowing iron(II) sulfate heptahydrate to be obtained.

### SUMMARY OF THE INVENTION

The presently claimed invention provides a method for producing iron(II) sulfate heptahydrate from materials containing iron(II) chloride that are generated by reacting iron or iron oxide containing materials with hydrochloric acid or from materials gained during the processing of iron (Fe), steel and/or iron containing ores, such as materials that are generated during the processing of ilmenite or materials containing iron(II) chloride that can be obtained from reacting compounds comprising metallic Fe, oxidic Fe, or metallic and oxidic Fe with HCl.

The method includes the following steps in the order as listed:
- Step 1: obtaining an aqueous solution comprising iron(II) chloride (FeCl₂),
- Step 2: treating the aqueous solution comprising iron(II) chloride to obtain a purified solution comprising iron(II) chloride,
- Step 3: reacting the purified solution of iron(II) chloride with sulfuric acid (H₂SO₄) to produce iron(II) sulfate monohydrate (FeSO_{4˙}H₂O), and
- Step 4: converting the iron(II) sulfate monohydrate into iron(II) sulfate heptahydrate (FeSO_{4˙}7H₂O).

Optionally, further purification may be carried out after the step of reacting the purified solution of iron(II) chloride with sulfuric acid to produce iron(II) sulfate monohydrate and/or the step of converting the iron(II) sulfate monohydrate into iron(II) sulfate heptahydrate.

### DETAILED DESCRIPTION

The main steps of the claimed invention will be described in greater detail in the following. *(1) Step of obtaining an aqueous solution comprising iron(II) chloride.*

The raw materials employed in the process of the presently claimed invention are materials that are generated during the processing of iron, steel and/or iron containing ores, such as materials that are generated during the processing of ilmenite. These can be in the form of solids, liquids or liquid-solid mixtures. The first step of the process of the invention is aimed at converting the raw materials into a state that simplifies their further treatment.

In the case of raw materials that are solids or liquid-solid mixtures the processing may include comminution so as to reduce the particle size and to make the materials more homogeneous. Any commonly known means for reducing particle sizes, e.g. crushing, grinding, cutting or vibrating, may be employed in this step, and the solid portion of the treated material preferably exhibits a particle size that allows it to pass through a mesh having openings the size of 50 mm or less, preferably 25 mm or less and more preferably 10 mm or less.

In the case of raw materials that are solids, the comminuted raw material is mixed with water or with hydrochloric acid so as to allow iron(II) chloride to be dissolved. Any equipment that is commonly used for mixing solids and liquids may be employed in this operation. Water or hydrochloric acid may also be added to raw materials that are in the form of liquid-solid mixtures in order to improve the handling thereof. The amount of water or acid added preferably is chosen so that any iron(II) chloride or iron containing materials that are contained in the raw materials may be dissolved and the resulting solution or liquid-solid mixture exhibits sufficient fluidity to allow for easy handling and conveyance thereof. From the standpoint of process economy, the solids content in the obtained liquid-solid mixtures preferably will not exceed 25% by weight, more preferably it will not be more than 10% by weight and most preferably it will not be more than 5% by weight. The liquid-solid mixture may be heated and/or agitated in order to speed up the dissolution of iron(II) chloride. Once the raw material is in the form of a solution or a liquid-solid mixture, which may be the case from the start, a step of removing residual solids therefrom is carried out. The means for performing the separation into a solid fraction and a liquid fraction are not limited and any type of equipment that is commonly used for such a procedure may be employed. For example, the solids may be removed by filtration or centrifugation. The liquid fraction comprising dissolved iron(II) chloride and other dissolved components, e.g. the filtrate in the case of using filtration to separate solids, is passed on to the next stage of the process for further purification.

The FeCl₂ that is employed in Step 1 can be obtained (all or in part) by reacting compounds comprising metallic Fe, oxidic Fe, or metallic and oxidic Fe with HCl.Preferably, the compounds comprising metallic Fe, oxidic Fe, or metallic and oxidic Fe, are millscale, magnetite, or steelmill dust.

### (2) Step of treating the aqueous solution comprising iron(II) chloride to obtain a purified solution comprising iron(II) chloride.

The aqueous solution of iron(II) chloride that is obtained from the initial processing of the raw materials typically will contain a variety of impurities and thus must be subjected to further purification.

The purification process typically will comprise a combination of one or more purification measures, depending on the nature and amount of impurities that are present. These measures may include, but are not limited to filtration, sedimentation, centrifugation, ion exchange, solvent extraction and electrochemical purification. Not limiting oneself to any one given means of purification allows the process to be adapted to the use of different raw materials.

Possible purification measures include ones employing activated charcoal or coke. These can be effective for removing heavy metals and organic impurities. Electrochemical purification measures can be used to remove impurities through reductive deposition. These can be effective for removing metal ions having a reduction potential that is higher than that of iron(II). Ion exchange and solvent extraction methods can be tailored for the removal of specific impurities, such as rare earth elements, and thus are particularly suited for adapting the process to different types of raw materials.

The aforementioned purification measures allow the most pertinent impurities, such as heavy metals, transition metals and rare earth metals to be removed from the solution. However, the solution may still contain components such as dissolved hydrochloric acid (HCl). At this stage, the concentration of iron(II) chloride in the solution typically will lie in the range of 20-35 wt.%.

In order to remove dissolved hydrochloric acid and to increase the concentration of iron(II) chloride the solution can be subjected to fractionated distillation. This typically involves preheating the solution to a temperature above 150°C (at 1 bar pressure) in a heat exchanger and then feeding the heated liquid to a distillation column for fractionation. Lower temperatures are possible in case of distillation at pressures of less than 1 bar. Gaseous hydrochloric acid and water vapor can be recovered for reuse from the upper part of the distillation column and a concentrated solution of iron(II) chloride can be withdrawn from the lower part of the distillation column and fed to the next process step. Part of the withdrawn solution of iron(II) chloride may also be returned to the distillation column in orderto improve process efficiency.

From the standpoint of process efficiency and quality of the obtained products, the concentration of iron(II) chloride in the solution comprising iron(II) chloride preferably is greater than or equal to 30% by weight, even more preferably greater than or equal to 35% by weight, at the end of the stage of purification and concentration.

The purification in Step 2 also can involve the reduction of Fe(III), preferably using metallic Fe, SO₂, ascorbic acid, sodium dithionate, or sodium hydroxymethane sulfinate.

### (3) Step of reacting the purified solution of iron(II) chloride with sulfuric acid to produce iron(II) sulfate monohydrate.

In the process of the present invention, iron(II) sulfate is generated by the reaction of the purified solution of iron(II) chloride with excess sulfuric acid according to the following equation: FeCl₂ + H₂SO₄ → FeSO₄ + 2HCl. The iron(II) sulfate subsequently is allowed to precipitate as iron(II) sulfate monohydrate. To this end, the purified solution of iron(II) chloride typically is treated with excess sulfuric acid in a precipitating reactor to produce iron(II) sulfate monohydrate and hydrochloric acid (HCl).

Since the solution of iron(II) chloride is concentrated after purification, the sulfuric acid used for reaction therewith need not be highly concentrated. Typically, the acid content of the sulfuric acid will amount to at least 60% by weight, with an acid content of greater than 78% by weight being preferred. The molar ratio of iron(II) chloride in the purified solution of iron(II) chloride to sulfuric acid being fed to the reactor typically lies between 1:3 and 1:5, and preferably is about 1:4. From the standpoint of maximizing the yield of the iron(II) sulfate monohydrate, the acid content of the sulfuric acid and the mixing ratio preferably is chosen so that the concentration of sulfuric acid in the mixture will be at least 40 % by weight, more preferably so that the concentration will be at least 50 % by weight, and even more preferably so that the concentration will be in the range of from 55 to 65 % by weight.

The temperature in the precipitating reactor is controlled through intervention of a heat exchanger and typically lies in the range of from 50° C to 105° C, preferably in the range of from 70° C to 105° C, and most preferably in the range of from 80° C to 90° C. When the reaction is carried out in a continuous process, the mean retention time of the solution of iron(II) chloride in the precipitating reactor is determined on the basis of the flow rate of the solution of iron(II) chloride and the sulfuric acid and the reactor volume. The mean retention time generally lies in the range of from 1 to 5 hours. Reaction monitoring can be used to suitably adjust the retention time by adjusting the flow rates.

A stream of air or inert gas can be passed through the reaction mixture or over the reaction mixture in order to improve the mixing of the components and to drive out hydrogen chloride that is generated during the reaction. The hot gas phase containing inert gas, water and hydrochloric acid that develops in the reactor typically will be fed to an absorption tower (HCl absorber) for removal of hydrochloric acid for further processing. After removal of the hydrochloric acid, the gaseous phase may also be recycled to the reactor in order to save energy.

The solubility of iron(II) sulfate is lower than the solubility of iron(II) chloride. This allows iron(II) sulfate monohydrate to crystallize from the reaction mixture so as to yield a suspension comprising iron(II) sulfate monohydrate as undissolved component. At the end of the reaction the mother liquor of the suspension contains a minor amount of iron(II) sulfate, as well as sulfuric acid, hydrochloric acid and water. At this point, the suspension is subjected to filtration, preferably pressure filtration to isolate the iron(II) sulfate monohydrate. Commonly employed means of filtration, such as a belt filter or a drum filter, may be employed for this purpose. The mother liquor filtrate can be recycled back into the reactor in order to improve the overall efficiency of the process. To further increase its purity, the iron(II) sulfate monohydrate may be washed after the filtration procedure, e.g. with water, dilute sulfuric acid or steam. From the standpoint of avoiding loss of iron(II) sulfate monohydrate, washing with sulfuric acid is preferable.

Since the monohydrate is precipitated with an excess of sulfuric acid, the monohydrate filter cake contains residual sulfuric acid. Furthermore, depending on the source of the iron-containing material that is used in the process, it may also contain iron in the oxidation state 3+. In view of the further use of the iron(II) sulfate monohydrate, it is advantageous for it to comprise little or no sulfuric acid, as well as little or no iron 3+. Both, sulfuric acid as well as iron 3+ can be removed by making a slurry of the iron(II) sulfate monohydrate filter cake in water and adding scrap iron thereto. By reaction of the sulfuric acid with the scrap iron, hydrogen is formed which reduces iron 3+ to iron 2+. By adjusting the amount of scrap iron and sulfuric acid, the reaction mixture can be made to contain iron(II) sulfate more or less as the only iron compound. Reducing agents other than hydrogen also may be employed.

The obtained iron(II) sulfate monohydrate generally exhibits a high degree of purity of 90% and higher. If desired, further purification, e.g. by recrystallization, may be carried out at this stage. *(4) Step of converting the iron(II) sulfate monohydrate into iron(II) sulfate heptahydrate.*

The conversion of the iron(II) sulfate monohydrate into iron(II) sulfate heptahydrate can be carried out by known means, and typically is done by mixing the iron(II) sulfate monohydrate with excess water in a crystallization reactor so as to allow the iron(II) sulfate monohydrate to dissolve and iron(II) sulfate heptahydrate to be generated by the addition of water to the dissolved iron(II) sulfate according to the following equation: FeSO₄ + 7H₂O → FeSO_{4˙}7H₂O.

Residual sulfuric acid that may be adhering to the iron(II) sulfate monohydrate crystals may be neutralized, e.g. by the addition of metallic Fe.

In one embodiment, the amount of water added significantly exceeds the amount stoichiometrically necessary for the conversion of FeSO₄·7H₂O into FeSO₄·7H₂O.

In another embodiment, at least a part of any residual sulfuric acid adhering to the iron(II) sulfate monohydrate crystals is neutralized with agents other than metallic Fe, e.g. by Mg or MgO, or NaOH.

From the standpoint of maximizing the yield of the iron(II) sulfate heptahydrate, the weight ratio of iron(II) sulfate monohydrate to water in the reactor preferable lies in the range of from 1.00to 1.57, more preferable in the range of from 1.18 to 1.57, and even more preferable in the range of from 1.35 to 1.57, and most preferable in the range of from 1.45 to 1.55.

Another means of converting iron(II) sulfate monohydrate into Iron(II) sulfate heptahydrate consists of cooling a solution of iron(II) sulfate monohydrate to temperatures of about 20°C or less.

The temperature in the crystallization reactor and the retention time can be adjusted to optimize the crystallization process. In practice, the retention time generally will lie between four and eighteen hours and the temperature is kept between 10° C and 50° C, preferably in the range of from 10° C to 45° C, more preferably in the range of from 15° C to 40° C, and most preferably in the range of from 20° C to 35° C. This allows iron(II) sulfate heptahydrate to be formed as a crystallized product of high purity which can readily be separated from excess water and dissolved impurities. In order to support the dissolution of the iron(II) sulfate monohydrate the mixture of iron(II) sulfate monohydrate and water initially is heated to a temperature of about 60°C.

The separation of the crystallized iron(II) sulfate heptahydrate from excess water and dissolved impurities can be realized by means commonly known in the art, such as filtration, preferably pressure filtration. Commonly employed means of filtration, such as a belt filter and a drum filter, may be employed for this purpose. Another approach for separating the crystallized iron(II) sulfate heptahydrate involves centrifugation. The separated liquid can be recycled back into the reactor in order to improve the overall efficiency of the process. To further increase its purity, the iron(II) sulfate heptahydrate may be washed after the separation procedure, e.g. with water.

Further drying of the obtained iron(II) sulfate heptahydrate may also take place. Such a drying operation may employ any means that is commonly known in the art, e.g. subjecting the iron(II) sulfate heptahydrate to a stream of heated air or air drying at ambient or elevated temperature.

The obtained iron(II) sulfate heptahydrate generally exhibits a very high degree of purity (95% or higher, and even 99% or higher).

## Claims

1. A method for producing iron(II) sulfate heptahydrate from materials containing iron(II) chloride, the method comprising the following steps, in the order as listed:
Step 1: obtaining an aqueous solution comprising iron(II) chloride,
Step 2: treating the aqueous solution comprising iron(II) chloride to obtain a purified solution comprising iron(II) chloride,
Step 3: reacting the purified solution of iron(II) chloride with sulfuric acid to produce iron(II) sulfate monohydrate, and
Step 4: converting the iron(II) sulfate monohydrate into iron(II) sulfate heptahydrate,
wherein
the materials containing iron(II) chloride are materials generated during the processing of iron, steel and/or iron containing ores.

2. The method according to claim 1, wherein the materials containing iron(II) chloride are materials generated during the processing of ilmenite.

3. The method according to claim 2, further comprising a Step 2a of subjecting the purified solution comprising iron(II) chloride to distillation to increase the iron(II) chloride concentration.

4. The method according to any one of claims 1 to 3, wherein the Step 2 of treating the aqueous solution comprising iron(II) chloride comprises one or more selected from filtration, ion exchange treatment, solvent extraction and electrochemical purification.

5. The method according to any one of claims 1 to 4, further comprising a Step 3a of carrying out filtration or centrifugation to isolate the iron(II) sulfate monohydrate from the reaction mixture prior to its conversion into iron(II) sulfate heptahydrate and/or a Step 4a of carrying out filtration or centrifugation to isolate the iron(II) sulfate heptahydrate after the Step 4 of converting the iron(II) sulfate monohydrate into iron(II) sulfate heptahydrate.

6. The method according to claim 5, comprising, in addition to the Step 3a, a Step 3b of washing and/or drying the separated iron(II) sulfate monohydrate prior to its conversion into iron(II) sulfate heptahydrate, and/or, in addition to the Step 4a, a Step 4b of washing and/or drying the iron(II) sulfate heptahydrate after the step of isolating the iron(II) sulfate heptahydrate.

7. The method according to claim 7, wherein the temperature in the precipitating reactor lies in the range of from 50° C to 105° C.

8. The method according to any one of claims 7 to 9, wherein the mixing ratio of the purified solution of iron(II) chloride and the sulfuric acid is chosen so that the concentration of sulfuric acid in the mixture will be at least 40 % by weight, and preferably in the range of from 55 to 65 % by weight.

9. The method according to any one of claims 7 to 10, wherein a mean retention time of the reaction mixture in the precipitating reactor in Step 3 is from 1 to 5 hours.

10. The method according to any one of claims 1 to 14, wherein the aqueous solution of iron(II) chloride and the sulfuric acid are combined at a volumetric ratio of between 1:3 and 1:5 in Step 3.

11. The method according to any one of claims 1 to 15, wherein the FeCl₂ in Step 1 is obtained in part or completely from reacting compounds comprising metallic Fe, oxidic Fe, or metallic and oxidic Fe with HCl.

12. The method according to claim 16, wherein the compounds comprising metallic Fe, oxidic Fe, or metallic and oxidic Fe, are millscale, magnetite, or steelmill dust.

13. The method according to any one of claims 1 to 15, wherein the concentration of the FeCl₂ solution in Step 1 is increased by reacting HCl that is present in or introduced into the FeCl₂ solution with compounds comprising metallic Fe, oxidic Fe, or metallic and oxidic Fe.

14. The method according to any one of claims 1 to 17, wherein the purification in Step 2 involves the reduction of Fe(III), preferably using metallic Fe, SO₂, ascorbic acid, sodium dithionate, or sodium hydroxymethane sulfinate.

15. The method according to any one of claims 1 to 18, wherein the conversion in Step 4 involves reacting residual H₂SO₄ adhering to the FeSO_{4˙}H₂O with metallic Fe.
